# DEMANDE DE BREVET EUROPEEN

(11) **EP 2 009 430 A1**
(43) Date de publication de la demande: **31.12.2008**
(21) Numéro de dépôt: 08305185.4
(22) Date de dépôt: 21.05.2008
(51) Int. Cl.: G01N 25/00, G01K 1/14, G01K 1/02, G01K 13/00, F27D 21/00, F27B 9/40, B05D 3/02

(54) **Procédé de mesure du profil de température d'un objet réalisé en tôle métallique et couvert d'un revétement, pendant son passage dans une étuve de cuisson de ce revétement.**

(30) Priorité: 28.06.2007 FR 0756109
(71) Demandeur: Peugeot Citroën Automobiles SA, 78140 Vélizy-Villacoublay (FR)
(72) Inventeur: Brisson, Valérie, 92130, ISSY-LES-MOULINEAUX (FR); Labaurie, Stéphane, 78640, SAINT GERMAIN DE LA GRANGE (FR); Kominek, Xavier, 95120, ERMONT (FR)

(57) **Abrégé**

Le procédé consiste à mettre en place dans et/ou sur un objet en tôle tel qu'une caisse de véhicule, une pluralité de sondes de température en des points déterminants pour le relevé du profil de température, à acquérir les données de température mesurées par les sondes au cours du séjour de cuisson de l'objet dans l'étuve et à ressembler les données pour constituer le profil.

Selon l'invention, on construit une éprouvette (1) délimitant au moins une cavité ayant le même comportement thermique qu'au moins un corps creux de l'objet, on place une sonde de température supplémentaire dans la cavité, on maintient l'éprouvette (1) à l'intérieur de l'objet (C) pendant le séjour en étuve, on acquiert les données de température fournie par la sonde de température supplémentaire simultanément à l'acquisition des données fournies par la pluralité de sondes pour constituer le profil et, après ledit séjour en étuve, on ôte l'éprouvette (1) dudit objet (C).

## Description

La présente invention concerne un procédé de mesure du profil de température pendant le passage dans une étuve de cuisson d'un objet réalisé en tôle métallique et présentant notamment au moins un corps creux, ledit objet ayant préalablement été couvert d'un revêtement devant être soumis à une cuisson dans ladite étuve, procédé qui consiste à mettre en place dans et/ou sur ledit objet une pluralité de sondes de température en des points déterminants pour le relevé dudit profil de température, à acquérir les données de température mesurées par ladite pluralité de sondes au cours du séjour de cuisson dudit objet dans ladite étuve et à ressembler lesdites données pour constituer ledit profil.

L'invention concerne également une éprouvette destinée à être utilisée pour la mise en oeuvre de ce procédé.

Un tel procédé et une telle éprouvette peuvent être appliqués avec avantage dans l'industrie automobile par exemple, pour la cuisson de revêtements couvrant les caisses des véhicules, plus particulièrement la cuisson de revêtements appliqués par cataphorèse.

Dans l'industrie automobile, on sait que, pour être pleinement efficace contre la corrosion, les revêtements apportés par cataphorèse sur les caisses des véhicules doivent être soumis à une cuisson en étuve. Dans ce contexte, il est essentiel que la cuisson se fasse dans des conditions de température parfaitement maîtrisées impliquant lors du processus de cuisson, une connaissance précise de la température en chaque point de la caisse, et en particulier des points situés dans les corps creux formés dans celle-ci. En d'autres termes, il convient d'examiner l'évolution, tant quantitative que temporelle, de la température de nombreux points de la caisse, examen qui donne lieu à la formation de ce que l'on désignera par un « profil de température » dans ce qui va suivre.

En effet, une polymérisation efficace des différentes couches de peinture (anticorrosion, apprêt et laque) sur les pièces de carrosserie nécessite le maintien de la température des tôles au-dessus d'un seuil critique pendant la durée du traitement et ceci sans atteindre une température haute critique dite de « sur-cuisson » qui serait dommageable pour la durabilité de la peinture. L'une des difficultés tient dans le fait que l'évolution de la température d'une tôle dépend de son épaisseur et de son environnement. Par ailleurs, l'introduction d'inserts structuraux sur certains projets de véhicule nécessite de savoir prédire très tôt au cours du processus de conception, la température au niveau des corps creux de la caisse afin de vérifier si l'étuve à disposition permettra de garantir ou non une bonne cuisson de ces inserts.

Une telle vérification est notamment rendue possible par la simulation numérique, laquelle nécessite toutefois comme préalable, la construction d'un modèle numérique de l'étuve, parfois qualifié de modèle informatique de l'étuve.
Pour se faire, il est connu de procéder comme suit :
- mesurer le profil de température d'un véhicule physique existant, qualifié de caisse « échantillon »,
- construire un modèle numérique approximatif de l'étuve au travers de laquelle la caisse du véhicule est destinée à circuler, ce modèle étant construit sur la base de données géométriques et physiques de l'étuve,
- construire un modèle numérique de véhicule sur la base de données géométriques de la caisse de ce dernier,
- réaliser une première simulation numérique basée sur l'utilisation du modèle numérique approximatif de l'étuve et du modèle numérique du véhicule,
- ajuster progressivement les paramètres du modèle numérique de l'étuve selon les résultats de la précédente simulation,
- réaliser, par itérations, d'autres simulations numériques jusqu'à l'obtention d'une bonne concordance entre les profils de température mesuré et simulé d'un véhicule.

Une fois le modèle numérique de l'étuve connu, il pourra être exploité pour définir d'autres profils de température d'autres véhicules en cours de développement.

C'est pour cela que la construction d'un modèle informatique d'une étuve nécessite, de préférence le plus tôt possible au cours de l'établissement du projet de développement d'un nouveau véhicule, et bien entendu préalablement au traitement en série de toutes les caisses correspondant à ce projet, de connaître le profil de température dont il a été question ci-dessus, en faisant passer dans l'étuve une caisse « échantillon » sur laquelle on relève les températures caractéristiques à l'aide de sondes de température, que l'on met en place dans la caisse « échantillon » aux endroits appropriés.

Jusqu'ici, pour mettre en place les sondes de température dans les cavités de la caisse « échantillon », on pratiquait des opérations destructrices (désignées par le terme de métier « cafutage »), par exemple des trous, dans les tôles afin de pouvoir mettre en place les sondes de température et les fils de connexion nécessaires à leur fonctionnement.

L'invention a pour but de fournir un procédé de mesure du type évoqué ci-dessus, ainsi qu'une éprouvette utilisée pendant la mise en oeuvre de ce procédé, permettant de conserver l'intégrité des caisses utilisées pour la mesure du profil de température de sorte qu'elles puissent être utilisées sans aucune remise en état dans la chaîne de fabrication des véhicules, tout en s'affranchissant des opérations fastidieuses de préparation de la caisse

A cet effet, l'invention a pour premier objet un procédé de mesure du type précité, caractérisé en ce qu'il consiste en outre à construire une éprouvette réalisée en tôle métallique et délimitant au moins une cavité ayant sensiblement le même comportement thermique qu'au moins un corps creux dudit objet, à placer au moins une sonde de température supplémentaire dans ladite cavité, à maintenir ladite éprouvette à l'intérieur dudit objet pendant ledit séjour en étuve, à acquérir les données de température fournies par la sonde de température supplémentaire simultanément à l'acquisition des données fournies par ladite pluralité de sondes pour constituer ledit profil et, après ledit séjour en étuve, à ôter ladite éprouvette dudit objet.

Selon d'autres modes de mise en oeuvre, le procédé de l'invention comporte l'une ou l'autre des caractéristiques optionnelles ci-dessous, considérées individuellement ou ensemble :
- il consiste en outre à construire un modèle numérique de ladite étuve à l'aide dudit profil de température ;
- ledit objet en tôle métallique étant une caisse de véhicule automobile, le procédé consiste en outre à placer ladite éprouvette sur le plancher de ladite caisse pendant son séjour de cuisson dans ladite étuve.

L'invention a également pour objet une éprouvette destinée à être utilisée au cours de la mise en oeuvre du procédé tel que défini ci-dessus caractérisée en ce qu'elle comprend une boîte réalisée en tôle métallique, un cloisonnage réalisé à l'intérieur de ladite boîte pour y délimiter une pluralité de compartiments, au moins une sonde de température placée dans un desdits compartiments, un couvercle manoeuvrable pour accéder audit compartiment contenant ladite sonde et des moyens pour conduire vers l'extérieur de ladite boîte les données de température relevées par ladite sonde.

Selon d'autres modes de réalisation, l'éprouvette de l'invention comporte l'une ou l'autre des caractéristiques optionnelles ci-dessous, considérées individuellement ou ensemble :
- ladite boîte présente une forme parallélépipédique et ledit cloisonnage est formé de cloisons qui s'étendent perpendiculairement à deux parois extérieures opposées de ladite boite ;
- l'une desdites parois opposées et conformée sous la forme d'une trappe coulissante formant ledit couvercle manoeuvrable pour permettre l'accès auxdits compartiments.

L'invention sera davantage comprise à la lumière de la description qui va suivre et illustrée par un exemple non limitatif sur les dessins annexés. Sur ces dessins :
- la figure 1 est une vue en perspective d'une éprouvette dont le couvercle a été enlevé, et qui est destinée à être employée pour la mise en oeuvre du procédé selon l'invention;
- la figure 2 est une vue très simplifiée en perspective d'une caisse de véhicule dans laquelle on a placée une éprouvette telle que celle représentée sur la figure 1.

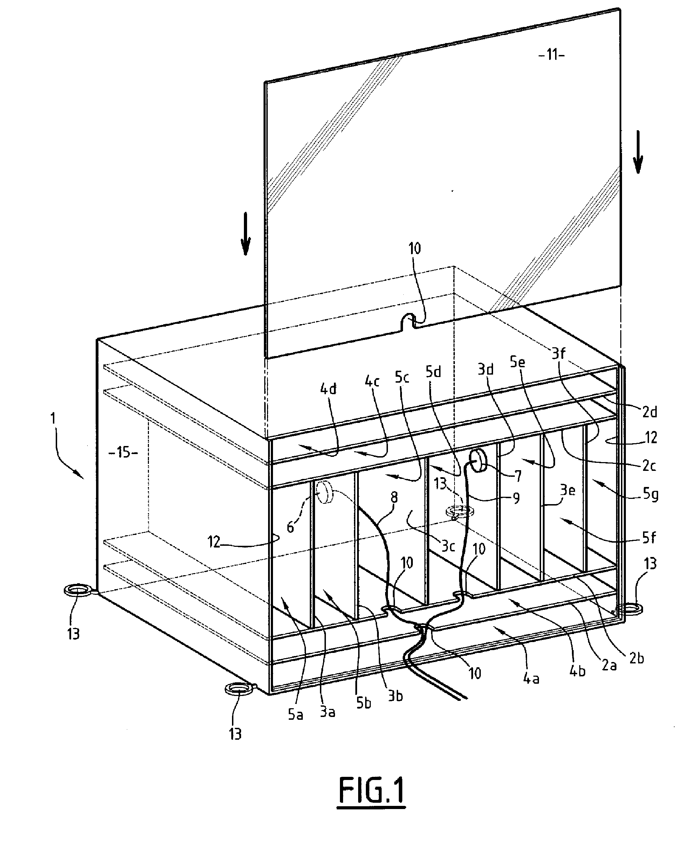

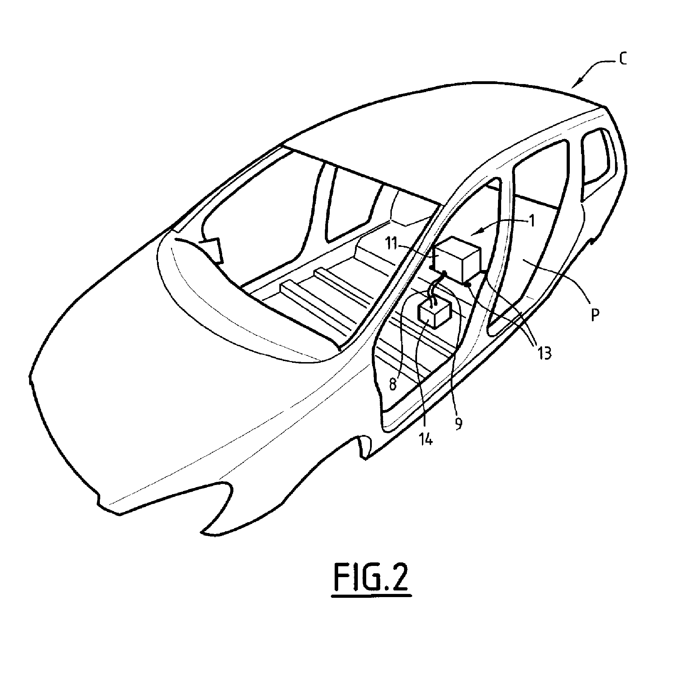

L'éprouvette illustrée sur la figure 1, est formée d'une boîte 1 de forme parallélépipédique et réalisée en tôle de préférence du même type avec lequel est constituée la caisse de véhicule servant au relevé du profil de température. Un exemple de caisse dans laquelle l'éprouvette peut être utilisée est représentée sur la figure 2 et repérée par la référence C. La boîte 1 est revêtue, le cas échéant, du même revêtement couvrant cette caisse C au moment où elle est soumise à un relevé du profil de température.

Dans l'exemple représenté, la boîte 1 est compartimentée afin de simuler les volumes creux pouvant se présenter dans la caisse C. Ainsi, elle comprend des cloisons horizontales 2a à 2d, situées au voisinage respectivement de sa face supérieure et de son fond auxquels elles sont parallèles, et des cloisons verticales 3a à 3f disposées parallèlement les unes aux autres et à ses faces latérales et s'étendant entre les cloisons horizontales 2b et 2c. On trouve ainsi dans la boîte 1 des compartiments horizontaux 4a à 4d et des compartiments verticaux 5a à 5g.

Deux sondes de température 6 et 7 sont placées à l'intérieur de la boîte, en l'occurrence dans les compartiments 5c et 5d. Il s'agit de préférence de sondes à fixation magnétique adhérant facilement aux cloisons de la boîte 1, ce qui facilite leur mise en place. On préfère utiliser deux sondes de température afin de disposer de données de température redondantes évitant des difficultés d'acquisition au cours d'un processus de relevé, si l'une des sondes venait à tomber en panne. Cependant, à strictement parler, une seule sonde de température peut suffire.

Les sondes de température 6 et 7 sont munies de fils de connexion 8 et 9 qui, pour pouvoir porter les signaux utiles vers l'extérieur de la boîte 1, passent dans des échancrures 10 pratiquées en des endroits appropriés dans les cloisons 2a et 2b. Une telle échancrure 10 est également ménagée dans le bord inférieur d'un couvercle ou trappe manoeuvrable 11 obturant le devant de la boîte 1 et pouvant coulisser dans des rails latéraux verticaux 12. La boîte 1 est également munie d'oeillets 13 destinés à assurer son immobilité dans la caisse C au moment des mesures. Des fils de fer appropriés (non représentés) passés dans ces oeillets 13 et accrochés sur la caisse C peuvent utilement servir à cet effet.

L'objectif de l'éprouvette que l'on vient de décrire est de reproduire le comportement thermique d'un corps creux ménagé dans la caisse C. Ceux-ci sont généralement caractérisés par des empilements de tôles qui les délimitent. C'est pour cette raison que l'éprouvette est munie d'un cloisonnage permettant d'en isoler l'intérieur des sources de chaleur de l'étuve au moment du relevé de la température.

Comme représenté sur la figure 2, lors d'un relevé de température, la boîte 1 est placée de préférence sur le plancher P de la caisse C et raccordée à un appareil d'acquisition 14 placé dans son voisinage par l'intermédiaire des fils 8 et 9. A cet égard, il est important qu'elle soit positionnée dans l'habitacle, à un endroit tel qu'elle ne puisse pas être frappée par un flux direct provenant d'une source de chaleur de l'étuve, par exemple celui passant par une ouverture de fenêtre. Il est également préférable de la placer loin des brancards et autres renforts de la caisse, car sa présence dégrade localement légèrement la cuisson des tôles, notamment à l'endroit précis où elle est posée. En général, le plancher arrière P ne présente aucun problème de cuisson, et il est donc possible et facile de la placer à cet endroit.

Le cloisonnage de la boîte 1 représentée comme exemple de réalisation est choisi particulièrement pour une telle localisation dans la caisse C. La trappe 11 étant alors orientée vers l'avant de celle-ci, elle ne peut être exposée à des sources de chaleur directes de l'étuve, comme cela est le cas de la paroi arrière. En revanche, comme cela est visible sur la figure 2, les parois latérales de la boîte 1 sont en regard d'ouvertures de la caisse C et ainsi exposées davantage aux sources de chaleur. C'est pourquoi il est avantageux de prévoir un cloisonnement vertical formé par les cloisons 5a à 5f dans le but d'obtenir une simulation fidèle des conditions d'exposition des corps creux de la caisse C. Par ailleurs, on remarquera que le cloisonnage est formé de cloisons qui s'étendent tous perpendiculairement à deux parois extérieures opposées de la boîte, c'est-à-dire à la paroi avant formée par la trappe 11 et à la paroi arrière 15. Ce cloisonnement facilite également la mise en place des sondes 6 et 7 par le devant de l'appareil par lequel les volumes des compartiments 5a à 5g sont accessibles une fois la trappe 11 soulevée.

Les cloisons 2a et 2c comprennent de préférence des rainures (non représentées) formant chacune une glissière pour les bords des cloisons verticales 3a à 3f montées amovibles à l'intérieure de la boîte 1. Il est ainsi rendu possible de positionner facilement les sondes 6 et 7 sur les cloisons en déplaçant linéairement ces dernières hors de la boîte 1. Au cours de l'exécution du procédé selon l'invention, une caisse « échantillon » C est amenée à traverser une étuve de cuisson (connue en soi et non représentée sur les dessins), placée par exemple sur une ligne de production de véhicules. Pendant le séjour de la caisse en étuve, les éléments actifs de l'étuve sont commandés pour imposer à la caisse une certaine courbe de température (réchauffement, palier et refroidissement). Pendant ce processus, la température de la caisse C est mesurée en de nombreux points par des sondes de température qui y ont été apposées au préalable. Aucune sonde n'est placée dans les corps creux de la caisse C.

Cependant, selon l'invention, on relève également la température dans une boîte telle que la boîte 1 placée au préalable dans la caisse, par exemple sur le plancher P afin de simuler la situation régnant dans les corps creux de la caisse C.

L'ensemble des données étant acquis, on obtient le profil de température recherché pour pouvoir construire le modèle numérique de l'étuve concernée. Ce modèle numérique peut ensuite être utilisé pour simuler les températures sur d'autres modèles numériques de véhicule durant les phases de développement.

On peut ainsi vérifier très prématurément au cours du développement d'un nouveau véhicule qu'une étuve existante présente sur un site de fabrication est adaptée à traiter ce nouveau véhicule et le cas échéant procéder aux modifications nécessaires bien avant la mise en fabrication du véhicule.

Bien entendu, le procédé selon l'invention peut être utilisé également pour ajuster ou contrôler un modèle d'étuve existant tout au long du développement et de la fabrication d'un modèle de véhicule donné et ce sans sacrifier une caisse ou sans entraîner la nécessité de réparer la caisse utilisée pour le relevé des données de température.

Le procédé selon l'invention peut également être utilisé pour évaluer et comparer des étuves entre elles sur la base des mesures réalisées dans l'éprouvette, indépendamment de toute simulation. C'est ainsi que plus la température dans l'éprouvette est élevée, meilleure est la capacité de l'étuve à assurer une bonne cuisson de la caisse et plus particulièrement des corps creux. En pratiquant des mesures physiques de température, il est permis d'obtenir une cartographie de l'ensemble des étuves et de lister celles susceptibles d'accueillir au mieux certaines catégories de véhicules pourvus ou non d'inserts structuraux.

## Revendications

1. Procédé de mesure du profil de température pendant le passage dans une étuve de cuisson d'un objet (C) réalisé en tôle métallique et présentant notamment au moins un corps creux, ledit objet ayant préalablement été couvert d'un revêtement devant être soumis à une cuisson dans ladite étuve, procédé qui consiste à mettre en place dans et/ou sur ledit objet une pluralité de sondes de température en des points déterminants pour le relevé dudit profil de température, à acquérir les données de température mesurées par ladite pluralité de sondes au cours du séjour de cuisson dudit objet dans ladite étuve et à ressembler lesdites données pour constituer ledit profil, **caractérisé en ce qu'**il consiste en outre à construire une éprouvette (1) réalisée en tôle métallique et délimitant au moins une cavité (5b, 5d) ayant sensiblement le même comportement thermique qu'au moins un corps creux dudit objet, à placer au moins une sonde de température supplémentaire (6, 7) dans ladite cavité (5b, 5d), à maintenir ladite éprouvette (1) à l'intérieur dudit objet (C) pendant ledit séjour en étuve, à acquérir les données de température fournies par la sonde de température supplémentaire (6, 7) simultanément à l'acquisition des données fournies par ladite pluralité de sondes pour constituer ledit profil et, après ledit séjour en étuve, à ôter ladite éprouvette (1) dudit objet (C).

2. Procédé suivant la revendication 1, **caractérisé en ce qu'**il consiste en outre à construire un modèle numérique de ladite étuve à l'aide dudit profil de température.

3. Procédé suivant la revendication 1 ou 2, **caractérisé en ce que** ledit objet en tôle métallique est une caisse de véhicule automobile (C), et **en ce qu'**il consiste en outre à placer ladite éprouvette (1) sur le plancher (P) de ladite caisse pendant son séjour de cuisson dans ladite étuve.

4. Eprouvette destinée à être utilisée au cours de la mise en oeuvre du procédé suivant l'une quelconque des revendications 1 à 3, **caractérisée en ce qu'**elle comprend une boîte (1) réalisée en tôle métallique, un cloisonnage (2a à 2d, 3a à 3f) réalisé à l'intérieur de ladite boîte pour y délimiter une pluralité de compartiments (4a à 4d, 5a à 5g), au moins une sonde de température (6, 7) placée dans un desdits compartiments (5b, 5d), un couvercle manoeuvrable (11) pour accéder audit compartiment contenant ladite sonde et des moyens (8, 9, 10) pour conduire vers l'extérieur de ladite boîte les données de température relevées par ladite sonde (6, 7).

5. Eprouvette suivant la revendication 5, **caractérisée en ce que** ladite boîte présente une forme parallélépipédique et **en ce que** ledit cloisonnage (2a à é2d, 3a à 3f) est formé de cloisons qui s'étendent perpendiculairement à deux parois extérieures opposées (11, 15) de ladite boîte (1).

6. Eprouvette suivant la revendication 5, **caractérisée en ce que** l'une desdites parois opposées est conformée sous la forme d'une trappe coulissante (11) formant ledit couvercle manoeuvrable pour permettre l'accès auxdits compartiments (4a à 4d, 5a à 5g).
